# EUROPEAN PATENT APPLICATION

(11) **EP 3 503 452 A1**
(43) Date of publication of application: **26.06.2019**
(21) Application number: 17210396.2
(22) Date of filing: 22.12.2017
(51) Int. Cl.: H04L 5/00

(54) **COORDINATED TRANSMISSION TO A CLIENT DEVICE SERVED BY MULTIPLE COMMUNICATION NETWORKS**

(71) Applicant: Koninklijke KPN N.V., 3072 AP Rotterdam (NL); Nederlandse Organisatie voor toegepast- natuurwetenschappelijk onderzoek TNO, 2595 DA 's-Gravenhage (NL)
(72) Inventor: JORGUSESKI, Ljupco, 2282 TR Rijswijk (NL); LITJENS, Remco, 2352 VH Voorschoten (NL); ZHANG, Haibin, 2274 EA Voorburg (NL); PAIS, Adrian Victor, 2274 JM Voorburg (NL)
(74) Representative: Wuyts, Koenraad Maria

(57) **Abstract**

The client device (1) of the invention is configured to receive service information from a first network device (19) in a first communication network, determine time periods (71) from the service information and transmit client information to a second network device (11) in a second communication network. The time periods indicate when the client device is unavailable for receiving transmissions from the second network device and the client information identifies the time periods. The second network device is configured to receive the client information from the client device, determine exclusion time periods (72) from the client information, prepare transmission of a data unit (61, 63) to the client device, schedule transmission of the data unit at a time outside the exclusion time periods, and transmit the data unit to the client device at the scheduled time.

## Description

### Field of the invention

The invention relates to a client device for transmitting client information and a network device for transmitting a data unit to a client device.

The invention further relates to a method of transmitting client information and a method of transmitting a data unit to a client device.

The invention also relates to a computer program product enabling a computer system to perform such methods.

### Background of the invention

In practice, content (e.g. live TV, live radio, vehicular information or public safety information) that is broadcast/multicast by a cellular communication network, e.g. via an LTE eMBMS (evolved Multimedia Broadcast Multicast Service) service, is normally only accessible for subscribers to this network. However, it is also possible to make broadcasts/multicasts by a network accessible for users who are not subscribers of the network. With 5G network technology, it will even be possible to broadcast/multicast content via dedicated cellular communication networks.

WO 2016/186720 A1 discloses a method for delivering content to an end user via shared broadcast. In this method, a mobile terminal tunes to a frequency provided by a first mobile network operator of which the mobile terminal is not a subscriber in order to receive an MBMS service via a carrier shared by the first mobile network operator and at least one other mobile network operator. In an embodiment, the control information for the MBMS service is received through a primary cell of the first mobile network operator and the MBMS service itself is received through a secondary cell shared by the first mobile network operator and the at least one other mobile network operator.

Normally, while a user is accessing content broadcast/multicast by a network of which the user is not a subscriber, the user still wants to able to use other (e.g. unicast) services like voice telephony, video streaming or web browsing via his home network subscription. This is not addressed in WO 2016/186720 A1. In order to receive all these services (including the broadcast/multicast service) in parallel, a mobile terminal of a subscriber to a certain network should temporarily tune and 'listen' within a certain time interval to another network to receive the broadcast/multicast content of interest. When the mobile terminal tunes to this other network, the user's (cellular) home network is unaware that the mobile terminal is no longer listening to it. Consequently, the user's home network may inadvertently schedule a transmission within this time interval, which would then be lost, because the mobile terminal is tuned to the other network.

### Summary of the invention

It is a first object of the invention to provide a client device, which helps communication networks transmit data more efficiently when the client device is alternately listening to different networks.

It is a second object of the invention to provide a network device, which is able to transmit data more efficiently when the client device is alternately listening to different networks.

It is a third object of the invention to provide a method of transmitting client information, which helps communication networks transmit data more efficiently when a client device is alternately listening to different networks.

It is a fourth object of the invention to provide a method of transmitting a data unit to a client device, which helps communication networks transmit data more efficiently when a client device is alternately listening to different networks.

According to the invention, the first object is realized in that the client device comprises at least one receiver, at least one transmitter, and at least one processor configured to use said at least one receiver to receive service information from a first network device in a first communication network, determine time periods from said service information, said time periods indicating when said client device is unavailable for receiving transmissions from a second network device in a second communication network, and use said at least one transmitter to transmit client information to said second network device, said client information identifying said time periods.

The communication network may be a cellular communication network, for example. The network device may comprise a base station (e.g. an LTE eNodeB), for example. The client information may specify one or more time periods when said client device is unavailable for receiving transmissions from the second network device or may specify one or more time periods when said client device is available for transmissions from the second network device. In the latter case, the client information does not specify, but does indicate when said client device is available for transmissions from the second network device, as the second network device may assume that the client device is unavailable for receiving transmissions from the second network device outside the specified one or more time periods,

The inventors have recognized that by having a client device indicate in which time periods it is unavailable for reception of paging messages and for (e.g. unicast) services such as voice telephony, video streaming and web browsing in the subscriber's home network, the network device in the subscriber's home network can reduce the amount of transmitted data that is not received by its client devices and thus use time and frequency resources more efficiently. Furthermore, this solution is more cost-effective than a solution that uses two receivers. If two receivers would be used, one receiver could stay tuned to the subscriber's home network and the other receiver could stay tuned to another network broadcasting/multicasting content.

Said at least one processor may be configured to determine first time periods according to a synchronization with said first network device from said service information, convert said first time periods to second time periods according to a synchronization with said second network device, and use said at least one transmitter to transmit said second time periods to said second network device.

Transmission time instances of different networks of different operators are typically different, as there is typically no inter-operator time synchronization, and time periods determined for the second network device are typically not usable by the first network device. It is beneficial to convert these time periods at the client device (e.g. using a determined time offset between the two networks), as the client device needs to report its (un)availability anyway and performing the conversion at the client device makes inter-operator time synchronization unnecessary (although inter-operator time synchronization may result in a more efficient use of time resources).

Alternatively, said time periods may be conform a synchronization with said first network device and said client information may identify said first network device and/or said first communication network. In this case, it may be the second network device that converts the time periods according to the synchronization between the client device and the first network device to time periods according to the synchronization between the client device and the second network device.

Said client information transmitted to said second network device may specify a first time period and a periodicity allowing further time periods to be computed. Since broadcasts and multicasts are typically transmitted at regular intervals, it may not be necessary to specify each time period separately and it may be sufficient to specify only the first time period and the periodicity. When using LTE, the periodicity may be specified in System Frame Number (SFNs) or subframes, for example.

Said client information transmitted to said second network device specifies a first time period and said first time period comprises one or more subframe numbers. Subframe numbers are used in LTE, amongst others. In LTE, a radio frame has a length of 10 milliseconds and each subframe has a length of 1 millisecond.

Said first time period may comprise at least one pairing of a System Frame Number and at least one of said one or more subframe numbers. Unless the broadcast/multicast is repeated in the same subframe(s) of each SFN, it is beneficial to be able to specify in which subframe(s) of which SFN the client device is unavailable. For example, the transmitted schedule may specify that the client device is unavailable in the last subframe of SFNᵢ and the first subframe of SFNᵢ₊₁ and that the periodicity is 4 SFNs (40ms). Thus, the next unavailability is in the last subframe of SFNi+4 and the first subframe of SFNi+5 (there are at most 1024 SFNs in LTE).

According to the invention, the second object is realized in that the network device comprises at least one receiver, at least one transmitter, and at least one processor configured to use said at least one receiver to receive client information from a client device, said client information identifying time periods, determine exclusion time periods from said client information, prepare transmission of a data unit to said client device, schedule transmission of said data unit at a time outside said exclusion time periods, and use said at least one transmitter to transmit said data unit to said client device at said scheduled time.

Said client information may identify time periods according to a synchronization between said network device and said client device. Alternatively, said client information may identify time periods according to a synchronization between said client device and a further communication network and identify said further communication network or a further network device in said further communication network, but said exclusion periods may be determined such that they are conform a synchronization between said network device and said client device.

Said client information received by said network device may specify a first time period and a periodicity allowing further time periods to be computed. Said client information received by said network device may specify a first time period and said first time period may comprise one or more subframe numbers. Said first time period may comprise at least one pairing of a System Frame Number and at least one of said one or more subframe numbers.

According to the invention, the third object is realized in that the method of transmitting client information comprises receiving service information from a first network device in a first communication network, determining time periods from said service information, said time periods indicating when said client device is unavailable for receiving transmissions from a second network device in a second communication network, and transmitting client information to said second network device, said client information identifying said time periods. Said method may be performed by software running on a programmable device. This software may be provided as a computer program product.

According to the invention, the fourth object is realized in that the method of transmitting a data unit to a client device comprises receiving client information from a client device, said client information identifying time periods, determining exclusion time periods from said client information, preparing transmission of a data unit to said client device, scheduling transmission of said data unit at a time outside said exclusion time periods, and transmitting said data unit to said client device at said scheduled time. Said method may be performed by software running on a programmable device. This software may be provided as a computer program product.

Moreover, a computer program for carrying out the methods described herein, as well as a non-transitory computer readable storage-medium storing the computer program are provided. A computer program may, for example, be downloaded by or uploaded to an existing device or be stored upon manufacturing of these systems.

A non-transitory computer-readable storage medium stores at least a first software code portion, the first software code portion, when executed or processed by a computer, being configured to perform executable operations comprising: transmitting client information comprises receiving service information from a first network device in a first communication network, determining time periods from said service information, said time periods indicating when said client device is unavailable for receiving transmissions from a second network device in a second communication network, and transmitting client information to said second network device, said client information identifying said time periods.

A non-transitory computer-readable storage medium stores at least a second software code portion, the second software code portion, when executed or processed by a computer, being configured to perform executable operations comprising: receiving client information from a client device, said client information identifying time periods, determining exclusion time periods from said client information, preparing transmission of a data unit to said client device, scheduling transmission of said data unit at a time outside said exclusion time periods, and transmitting said data unit to said client device at said scheduled time.

As will be appreciated by one skilled in the art, aspects of the present invention may be embodied as a device, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit", "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of devices, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

### Brief description of the Drawings

These and other aspects of the invention are apparent from and will be further elucidated, by way of example, with reference to the drawings, in which:
- Fig. 1 depicts two conventional base stations transmitting to the same conventional mobile device;
- Fig. 2 is a block diagram of a first embodiment of the network device of the invention and a first embodiment of the client device of the invention;
- Fig. 3 depicts the first embodiment of the network device transmitting to the first embodiment of the client device;
- Fig. 4 is a flow diagram of embodiments of the methods of the invention;
- Fig. 5 depicts a second embodiment of the network device transmitting to a second embodiment of the client device;
- Fig. 6 depicts a third embodiment of the network device transmitting to a third embodiment of the client device;
- Fig. 7 is a block diagram of an exemplary cellular telecommunication system used in an embodiment of the device and the system of the invention; and
- Fig. 8 is a block diagram of an exemplary data processing system for performing the methods of the invention.

Corresponding elements in the drawings are denoted by the same reference numeral.

### Detailed description of the Drawings

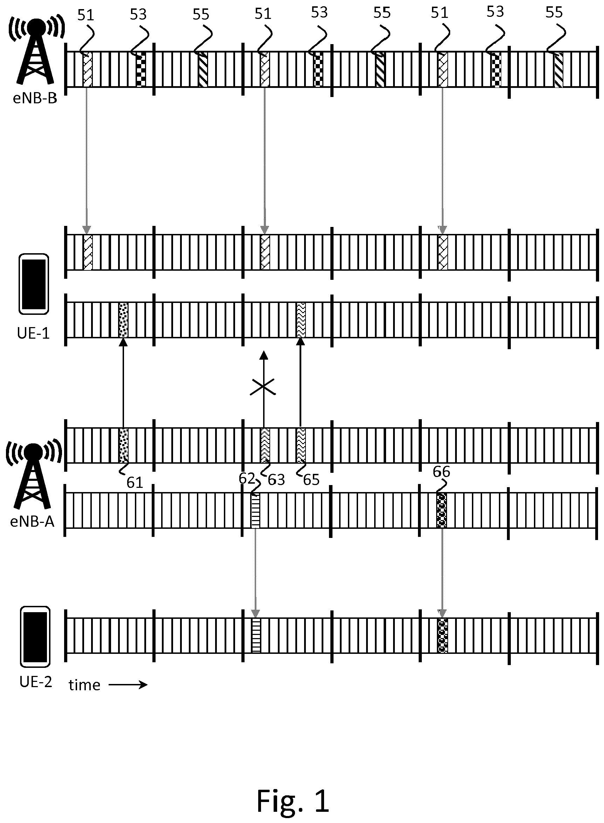

**Fig. 1** depicts two conventional base stations which do not use the invention, eNB-A and eNB-B, transmitting to the same conventional mobile device which does not use the invention, UE-1. eNB-A belongs to the home network of UE-1, while eNB-B broadcasts or multicasts content to UE-1. eNB-A also provides unicast services like voice telephony, video streaming or web browsing to UE-1 and may even provide additional (when compared to eNB-B) broadcast or multicast services. In order to receive both the broadcast/multicast service(s) and the unicast service(s) in parallel, UE-1 should normally tune to eNB-A and temporarily tune and 'listen' within a certain time interval to eNB-B to receive the broadcast/multicast content of interest.

**Fig. 1** shows eNB-B broadcasting or multicasting three different channels: a first channel in periodic time periods **51,** a second channel in periodic time periods **53** and a third channel in periodic time periods **55.** UE-1 receives service information from eNB-B that indicates when to tune to eNB-B in order to receive the first channel. UE-1 tunes to eNB-B in the time periods indicated in the service information with respect to the first channel (periodic time periods **51**). eNB-A provides unicast services to UE-1 and UE-2. eNB-A wants to transmit data units in time periods **61** and **63** to UE-1 and data units in time periods **62** and **66** to UE-2. When eNB-A first attempts to transmit a data unit in time period **63** to UE-1, UE-1 does not receive the data unit transmitted in time period **63,** because UE-1 is tuned to eNB-B in order to receive the first channel in one of the periodic time periods **51.** As a consequence, eNB-A needs to retransmit the same data unit in time period **65.** This time, the data unit is successfully received by UE-1. The failed first attempt in time period **63** causes an inefficient use of resources. This is a drawback that is addressed by the invention. The invention will be described next.

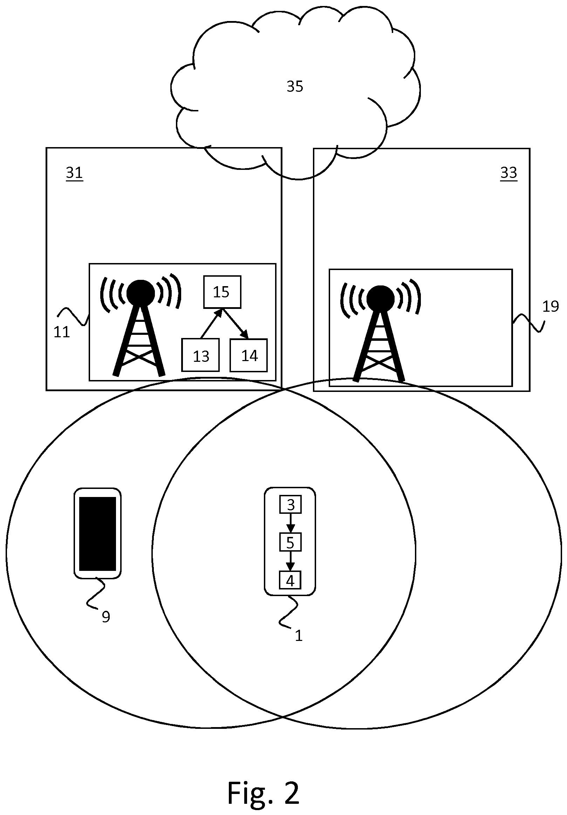

**Fig. 2** depicts a first embodiment of the network device of the invention, base station **11** in communication network **31,** and a first embodiment of the client device of the invention, mobile device **1.** The mobile device **1** comprises a receiver **3,** a transmitter **4** and a processor **5.** The processor **5** is configured to use the receiver **3** to receive (e.g. eMBMS) service information from a base station **19** in a communication network **33,** which broadcasts/multicasts data, and to determine time periods from the service information. The time periods indicate when the mobile device **1** is unavailable for receiving transmissions from the base station **11.** The processor **5** is further configured to use the transmitter **4** to transmit client information to base station **11.** The client information identifies the time periods.

The base station **11** comprises a receiver **13,** a transmitter **14** and a processor **15.** The processor **15** is configured to use the receiver **13** to receive the client information from the mobile device **1** and determine exclusion time periods from the client information. The processor **15** is further configured to prepare transmission of a data unit to the mobile device **1,** schedule transmission of the data unit at a time outside the exclusion time periods, and use the transmitter **14** to transmit the data unit to the mobile device **1** at the scheduled time. The base station **11** is also configured to use the transmitter **14** to transmit data units to mobile device **9.** The communication networks **31** and **33** are connected to each other via the Internet **35.** Base station **19** may be a conventional base station, for example.

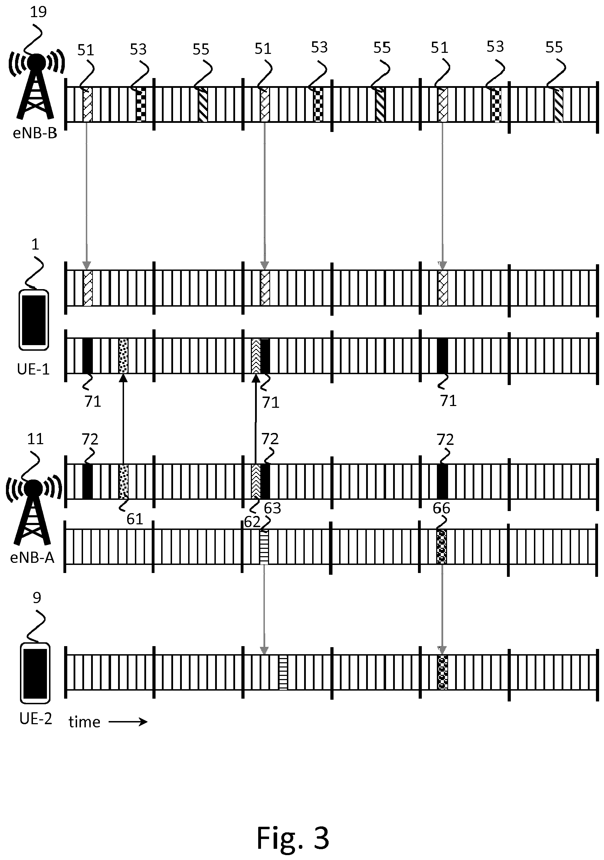

**Fig. 3** shows the base stations **11** and **19** both transmitting to the mobile device **1.** Compared to the **UE-1** of **Fig. 1****,** the improved **UE-1,** i.e. mobile device **1,** has determined periodic time periods **71** from the service information broadcast by base station **19** (eNB-B). By transmitting client information identifying these periodic time periods **71** to an improved eNB-A, i.e. base station **11,** base station **11** is able to determine exclusion time periods **72** and ensure that data units are not transmitted to mobile device **1** during these exclusion time periods.

In the example depicted in **Fig. 3****,** this results in base station **11** changing the order (compared to the order shown in **Fig. 1**) in which it transmits data units to mobile device **1** and to mobile device **9** (UE-2). By transmitting a data unit to mobile device **1** in time period **62** first, base station **11** can avoid an exclusion period of mobile device **1.** Base station **11** is able to transmit a data unit in time period **63** to mobile device **9** during the exclusion period of mobile device **1.** In **Fig. 3****,** the time period **63** is the same as one of the exclusion time periods **72.** In general, the exclusion time periods may be the same as the time periods identified in the client information or the base station **11** may process the time periods extracted from the client information in order to obtain the exclusion periods, possibly using other information specified in the client information. In **Fig. 3****,** exclusion time periods **72** are the same as periodic time periods **71.**

In the embodiment shown in **Fig. 2****,** the base station **11** comprises one processor **15.** In an alternative embodiment, the base station **11** comprises multiple processors. The processor **15** of the base station **11** may be a general-purpose processor, e.g. an Intel or an AMD processor, or an application-specific processor, for example. The processor **15** may comprise multiple cores, for example. The processor **15** may run a Unix-based or Windows operating system, for example. The receiver **13** and the transmitter **14** may use one or more cellular communication technologies such as GPRS, CDMA, UMTS and/or LTE to communicate with the mobile devices **1** and **9,** for example. The receiver **13** and the transmitter **14** may be combined in a transceiver. Base station **11** may comprise other components typical for a component in a (e.g. mobile) communication network, e.g. a power supply. In the embodiment shown in **Fig. 2****,** the base station **11** comprises one device. In an alternative embodiment, the base station **11** comprises multiple devices.

In the embodiment shown in **Fig. 2****,** the mobile device **1** comprises one processor **5.** In an alternative embodiment, the mobile device **1** comprises multiple processors. The receiver **3** and the transmitter **4** of the mobile device **1** may use one or more cellular communication technologies such as GPRS, CDMA, UMTS and/or LTE to communicate with the base stations **11** and **19,** for example. The receiver **3** and the transmitter **4** may be combined in a transceiver. The processor **5** may be a general-purpose processor, e.g. an ARM processor, or an application-specific processor. The processor **5** may run Google Android or Apple iOS as operating system, for example. The mobile device **1** may comprise other components typical for a mobile device, e.g. a display and a battery. The mobile device **1** may be a mobile phone, for example. In another embodiment, the client device of the invention may be a device other than a mobile device.

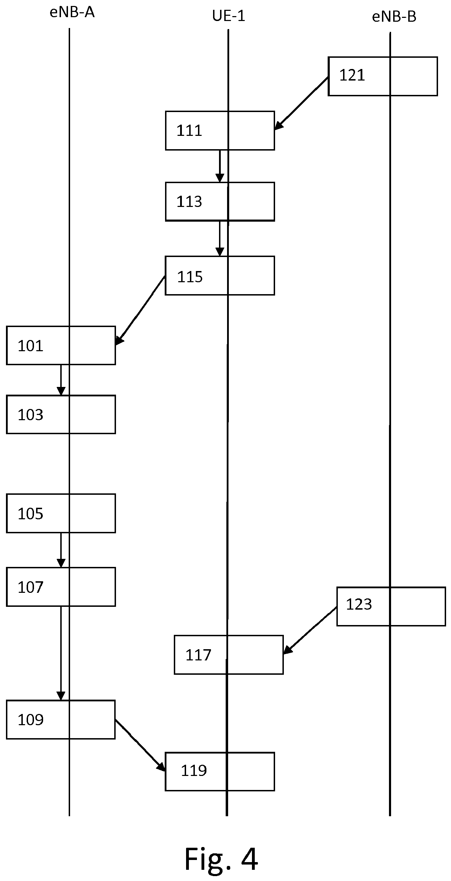

Embodiment of the methods of the invention are explained with the help of **Fig. 4****.** In step **121,** eNB-B (e.g. base station **19** of **Fig. 2**) is located in a communication network of operator B (e.g. communication network **33** of **Fig. 2**) and broadcasts service information. UE-1 (e.g. mobile device **1** of **Fig. 2**) receives this service information in step **111** and determines time periods from the service information in step **113.** The time periods indicate when the client device is unavailable for receiving transmissions from eNB-A (e.g. base station **11** of **Fig. 2**), located in a communication network of operator A (e.g. communication network **31** of **Fig. 2**). Typically, if the UE-1 receives transmissions from a third eNB in a third communication network, these time periods will also indicate when the client device is unavailable for receiving transmissions from this third eNB. In step **115,** UE-1 transmits client information to eNB-A.

The client information identifies the determined time periods. The client information specifies one or more time periods and optionally a periodicity which allows further time periods to be computed. For example, the periodicity may be specified by indicating that data units of a channel are transmitted every X SFNs (LTE System Frame Numbers) or every Y milliseconds. If data units of the same channel are transmitted in the same subframe(s) every SFN, then the client information may specify the one or more time periods by specifying one or more subframe number(s). If data units of the same channel are transmitted in different subframes of different SFNs, e.g. subframe 9 of SFNᵢ and subframe 0 of SFNᵢ₊₁, then the time periods may be specified by specifying one or more pairings between SFN and subframe number(s), e.g. "SFN:51, subframe:9; SFN:52, subframe:0; repetition: 2 SFNs".

The one or more time periods specified in the client information may be one or more time periods in which UE-1 is unavailable for receiving transmissions from eNB-A or one or more time periods in which UE-1 is available for transmissions from eNB-A, as long as UE-1 and eNB-A have a common understanding on how the time periods should be interpreted. UE-1 may specify one or more time periods which encompass, but are longer than the time periods in which it is receiving data from eNB-B, or may specify one or more time periods which exclude the time periods in which it is receiving data from eNB-B, but are shorter than the time periods in which it is not receiving data from eNB-B.

In step **101,** eNB-A receives the client information from UE-1. Next, eNB-A determines exclusion time periods from the client information in step **103.** Later, when a data unit for UE-1 has arrived at eNB-A (not shown), eNB-A prepares transmission of the data unit to UE-1 in step **105.** In Step **107,** eNB-A schedules transmission of the data unit at a time outside the exclusion time periods. Since eNB-A is not able to transmit the data unit before the next exclusion period, eNB-A schedules it for transmission after the next exclusion period. In step **109,** eNB-A transmits the data unit to UE-1 at the scheduled time. In step **119,** UE-1 receives the data unit from eNB-A. During the exclusion period, UE-1 receives a further data unit in step **117** that was broadcast or multicast by eNB-B in step **123.**

In LTE, a UE (client device) and an eNodeB (network device) synchronize by having the UE determine transmission time instances based on a Primary Synchronization Signal (PSS) and a Secondary Synchronization Signal (SSS). The PSS and SSS are sufficient to determine the radio frame border and the subframe (also referred to as Transmission Time Interval TTI) boundaries.

In case of eMBMS services, to determine the transmission time instances of a particular broadcast/multicast channel, the UE further needs to:
- Listen to the SIB (System Information Block) messages and determine in which SFNs and subframe the Multicast Control Channel (MCCH) is transmitted. The MCCH includes subframe allocation and Modulation Coding Scheme (MCS) for each Multicast Traffic Channel (MTCH).
- Listen to the MCCH and determine in which subframe(s) the one or more MTCHs in which the UE is interested are broadcast/multicast.

Typically, base stations of different networks are not synchronized with each other. It may therefore be necessary to take additional measures in order to ensure that the exclusion periods determined by the base station **11** for client device **1** indeed encompass the time when the client device **1** is receiving data from the base station **19.** This can be ensured by converting time periods as determined by the client device **1** from the service information received from the base station **19,** which are conform a synchronization between the base station **19** and the client device **1,** to time periods according to a synchronization between the base station **11** and the client device **1.** This conversion may be performed by the client device **1** or by the base station **11.**

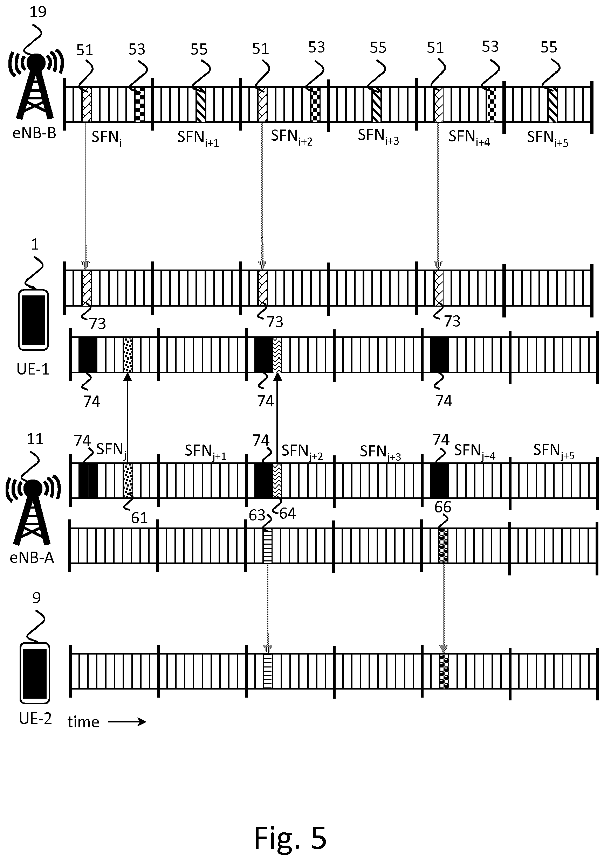

In case the conversion is performed by the client device **1,** the processor of the client device **1** may be configured to determine first (periodic) time periods **73** according to the synchronization with the base station **19** from the service information, see **Fig. 5****,** convert the first (periodic) time periods **73** to second (periodic) time periods **74** according to a synchronization with the base station **11** and identify the second (periodic) time periods **74** in the client information transmitted to the base station **11.**

When two networks are not synchronized, the result normally is that they will use different subframe boundaries and that a subframe of the first network overlaps with two subframes of the second network. This is also the case in the example shown in **Fig. 5****.** Base station **11** should therefore avoid transmitting to mobile device **1** during two of base station **11**'s subframes even though mobile device **1** is only tuned to base station **19** for the duration of one of base station **19**'s subframes. In **Fig. 5****,** time period **63** is encompassed by, but only has half the duration of, one of the exclusion time periods **74.** Since the exclusion time periods **74** in the example of **Fig. 5** are longer than the exclusion time periods **72** in the example of **Fig. 3****,** the data unit transmitted in time period **62** in the example of **Fig. 3** is transmitted in the time period **64** in the example of **Fig. 5****.**

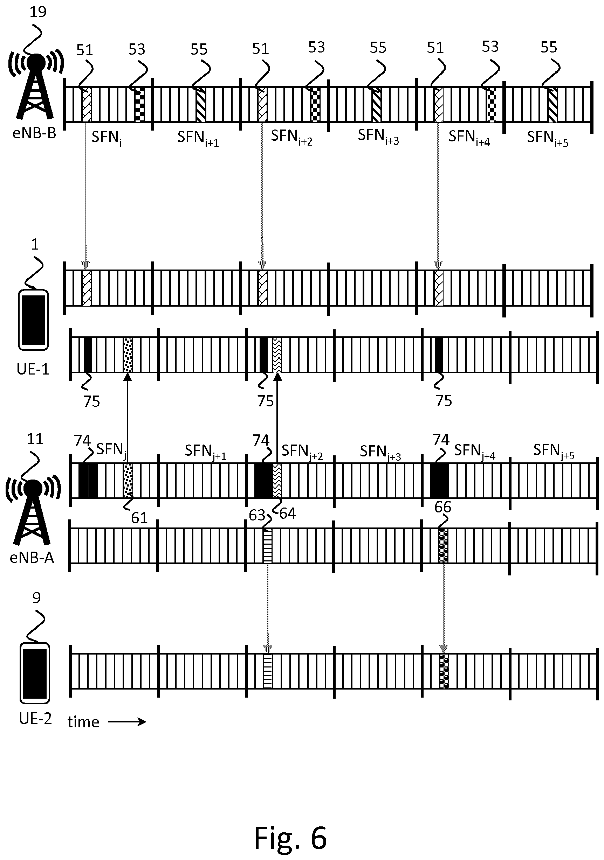

In case the conversion is performed by the base station **11,** the (periodic) time periods **75** identified in the client information received by the base station **11** from the client device **1,** see **Fig. 6****,** may be conform a synchronization between the client device **1** and the base station **19** and the client information may further identify the base station **19** and/or the communication network **33.** The base station **19** may be identified by specifying a cell ID, for example. The base station **11** may be configured to determine a time offset between base stations **11** and **19** or between communication networks **31** and **33** based on the identification of the base station **19** and/or the communication network **33** (e.g. the base station **11** obtains information identifying this time offset from the base station **19** or the communication network **33**) and determine the exclusion periods **74** from the client information by taking into account this time offset.

There are small propagation delays between the base station **11** transmitting a data unit and the mobile device **1** receiving this data unit and between the base station **19** transmitting a data unit and the mobile device **1** receiving this data unit. If there is a difference between these two propagation delays and this difference is not taken into account, this might cause the base station **11** to start transmitting a data unit before the mobile device **1** is tuned to the base station **11.**

This may happen when the conversion is performed by the base station **11.** Then, the processing in base station **11** determines the overlap only on the transmit side. When the base station **11** uses the synchronization offset between the two networks and consequently determines which transmitted sub-frames overlap between the two networks, it assumes that the propagation delays between the mobile device **1** and base stations **11** and **19** are the same or similar so the transmissions from these two base stations will 'perfectly' overlap in time at the receiver of the mobile device **1.** However, this 'perfect overlap' will not happen if the difference in the propagation delays is relatively large.

However, since these propagation delays are small (due to the speed of light), the mobile device **1** will then normally tune to the base station **11** within the guard interval before the first symbol of the data unit, preventing the data unit from being received corrupted.

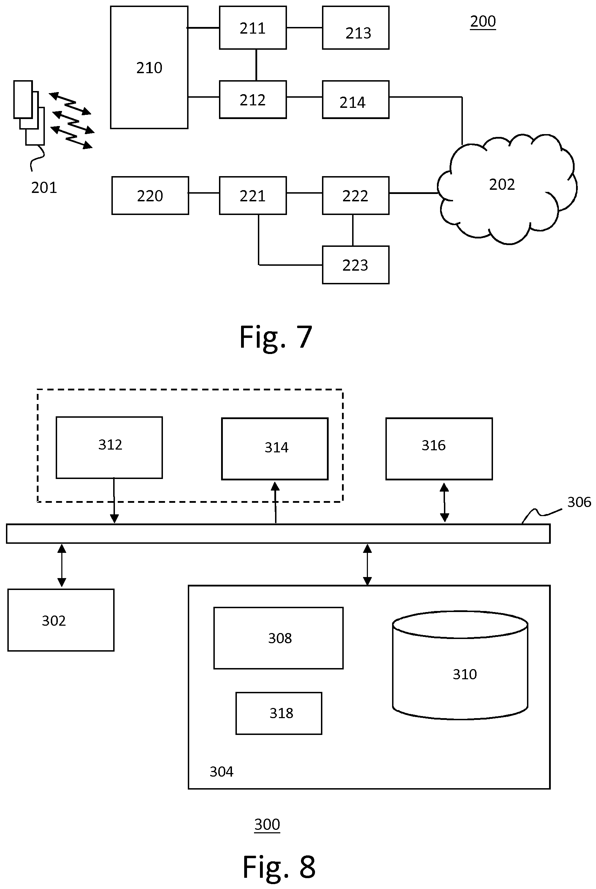

In the telecommunications system **200** of **Fig. 7****,** three generations of networks are schematically depicted together for purposes of brevity. A more detailed description of the architecture and overview can be found in 3GPP Technical Specification TS 23.002 'Network Architecture' which is included in the present application by reference in its entirety. Other types of cellular telecommunication system can alternatively or additionally be used, e.g. a 5G cellular telecommunication system.

The lower branch of **Fig. 7** represents a GSM/GPRS or UMTS network.

For a GSM/GPRS network, a radio access network (RAN) system **220** comprises a plurality of nodes, including base stations (combination of a BSC and a BTS), not shown individually in **Fig. 7****.** The core network system comprises a Gateway GPRS Support Node **222** (GGSN), a Serving GPRS Support Node **221** (SGSN, for GPRS) or Mobile Switching Centre (MSC, for GSM, not shown in **Fig. 5**) and a Home Location Register **223** (HLR). The HLR **223** contains subscription information for user devices **201,** e.g. mobile stations MS.

For a UMTS radio access network (UTRAN), the radio access network system **220** also comprises a Radio Network Controller (RNC) connected to a plurality of base stations (NodeBs), also not shown individually in **Fig. 7****.** In the core network system, the GGSN **222** and the SGSN **221**/MSC are connected to the HLR **223** that contains subscription information of the user devices **201,** e.g. user equipment UE.

The upper branch of the telecommunications system in **Fig. 7** represents a 4G network, commonly indicated as Long Term Evolution (LTE) system or Evolved Packet System (EPS).

The radio access network system **210** (E-UTRAN) of the EPS, comprises base stations (evolved NodeBs, eNodeBs or eNBs), not shown individually in **Fig. 7****,** providing cellular wireless access for a user device **201,** e.g. user equipment UE. The core network system comprises a PDN Gateway (P-GW) **214** and a Serving Gateway **212** (S-GW). The E-UTRAN **210** of the EPS is connected to the S-GW **212** via a packet network. The S-GW **212** is connected to a Home Subscriber Server HSS **213** and a Mobility Management Entity MME **211** for signalling purposes. The HSS **213** includes a Subscription Profile Repository SPR for user devices **201.**

For GPRS, UMTS and LTE systems, the core network system is generally connected to a further packet network **202,** e.g. the Internet.

Further information of the general architecture of an EPS network can be found in 3GPP Technical Specification TS 23.401 'GPRS enhancements for Evolved Universal Terrestrial Radio Access Network (E-UTRAN) access'.

**Fig. 8** depicts a block diagram illustrating an exemplary data processing system that may perform the method as described with reference to **Fig. 4****.**

As shown in **Fig. 8****,** the data processing system **300** may include at least one processor **302** coupled to memory elements **304** through a system bus **306.** As such, the data processing system may store program code within memory elements **304.** Further, the processor **302** may execute the program code accessed from the memory elements **304** via a system bus **306.** In one aspect, the data processing system may be implemented as a computer that is suitable for storing and/or executing program code. It should be appreciated, however, that the data processing system **300** may be implemented in the form of any system including a processor and a memory that is capable of performing the functions described within this specification.

The memory elements **304** may include one or more physical memory devices such as, for example, local memory **308** and one or more bulk storage devices **310.** The local memory may refer to random access memory or other non-persistent memory device(s) generally used during actual execution of the program code. A bulk storage device may be implemented as a hard drive or other persistent data storage device. The processing system **300** may also include one or more cache memories (not shown) that provide temporary storage of at least some program code in order to reduce the number of times program code must be retrieved from the bulk storage device **310** during execution.

Input/output (I/O) devices depicted as an input device **312** and an output device **314** optionally can be coupled to the data processing system. Examples of input devices may include, but are not limited to, a keyboard, a pointing device such as a mouse, or the like. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in **Fig. 8** with a dashed line surrounding the input device **312** and the output device **314**). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter **316** may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system **300,** and a data transmitter for transmitting data from the data processing system **300** to said systems, devices and/or networks. Modems, cable modems, and Ethernet cards are examples of different types of network adapter that may be used with the data processing system **300.**

As pictured in **Fig. 8****,** the memory elements **304** may store an application **318.** In various embodiments, the application **318** may be stored in the local memory **308,** he one or more bulk storage devices **310,** or separate from the local memory and the bulk storage devices. It should be appreciated that the data processing system **300** may further execute an operating system (not shown in **Fig. 8**) that can facilitate execution of the application **318.** The application **318,** being implemented in the form of executable program code, can be executed by the data processing system **300,** e.g., by the processor **302.** Responsive to executing the application, the data processing system **300** may be configured to perform one or more operations or method steps described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor **302** described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.
The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration, but is not intended to be exhaustive or limited to the implementations in the form disclosed. Many modifications and variations will be apparent to those of ordinary skill in the art without departing from the scope and spirit of the present invention. The embodiments were chosen and described in order to best explain the principles and some practical applications of the present invention, and to enable others of ordinary skill in the art to understand the present invention for various embodiments with various modifications as are suited to the particular use contemplated.

## Claims

1. A client device (1), comprising:
at least one receiver (3);
at least one transmitter (4); and
at least one processor (5) configured to:
- use said at least one receiver (3) to receive service information from a first network device (19) in a first communication network (33),
- determine time periods from said service information, said time periods indicating when said client device is unavailable for receiving transmissions from a second network device (11) in a second communication network (31), and
- use said at least one transmitter (4) to transmit client information to said second network device (11), said client information identifying said time periods.

2. A client device (1) as claimed in claim 1, wherein said at least one processor (5) is configured to:
- determine first time periods according to a synchronization with said first network device (19) from said service information,
- convert said first time periods to second time periods according to a synchronization with said second network device (11), and
- use said at least one transmitter to transmit said second time periods to said second network device (11).

3. A client device (1) as claimed in claim 1, wherein said time periods are conform a synchronization with said first network device (19) and said client information identifies said first network device (19) and/or said first communication network (33).

4. A client device (1) as claimed in any one of the preceding claims, wherein said client information transmitted to said second network device (11) specifies a first time period and a periodicity allowing further time periods to be computed.

5. A client device (1) as claimed in any one of the preceding claims, wherein said client information transmitted to said second network device (11) specifies a first time period and said first time period comprises one or more subframe numbers.

6. A client device (1) as claimed in claim 5, wherein said first time period comprises at least one pairing of a System Frame Number and at least one of said one or more subframe numbers.

7. A network device (11) for use in a communication network, comprising:
at least one receiver (13);
at least one transmitter (14); and
at least one processor (15) configured to:
- use said at least one receiver (13) to receive client information from a client device (1), said client information identifying time periods,
- determine exclusion time periods from said client information,
- prepare transmission of a data unit to said client device (1),
- schedule transmission of said data unit at a time outside said exclusion time periods, and
- use said at least one transmitter (14) to transmit said data unit to said client device (1) at said scheduled time.

8. A network device (11) as claimed in claim 7, wherein said client information identifies time periods according to a synchronization between said network device (11) and said client device (1).

9. A network device (11) as claimed in claim 7, wherein said client information identifies time periods according to a synchronization between said client device and a further communication network (33) and identifies said further communication network (33) or a further network device (19) in said further communication network and wherein said exclusion periods are conform a synchronization between said network device (11) and said client device (1).

10. A network device (11) as claimed in any one of claims 7 to 9, wherein said client information received by said network device (11) specifies a first time period and a periodicity allowing further time periods to be computed.

11. A network device (11) as claimed in any one of claims 7 to 10, wherein said client information received by said network device (11) specifies a first time period and said first time period comprises one or more subframe numbers.

12. A network device (11) as claimed in claim 11, wherein said first time period comprises at least one pairing of a System Frame Number and at least one of said one or more subframe numbers.

13. A method of transmitting client information, comprising:
- receiving (111) service information from a first network device in a first communication network;
- determining (113) time periods from said service information, said time periods indicating when said client device is unavailable for receiving transmissions from a second network device in a second communication network; and
- transmitting (115) client information to said second network device, said client information identifying said time periods.

14. A method of transmitting a data unit to a client device,
- receiving (101) client information from a client device, said client information identifying time periods;
- determining (103) exclusion time periods from said client information;
- preparing (105) transmission of a data unit to said client device;
- scheduling (107) transmission of said data unit at a time outside said exclusion time periods; and
- transmitting (109) said data unit to said client device at said scheduled time.

15. A computer program or suite of computer programs comprising at least one software code portion or a computer program product storing at least one software code portion, the software code portion, when run on a computer system, being configured for performing the method of any one of claims 13 to 14.
